# EUROPEAN PATENT SPECIFICATION

(11) **EP 0 442 608 B1**
(45) Date of publication and mention of the grant of the patent: **09.08.1995**
(21) Application number: 91300281.2
(22) Date of filing: 15.01.1991
(51) Int. Cl.: G02B 6/42, H01L 25/16, H01L 31/0203

(54) **Transceiver package**
Gehäuse für einen Sender-Empfänger
Boîtier pour appareil émetteur-récepteur

(30) Priority: 19.01.1990 US 467825; 15.02.1990 US 480702
(43) Date of publication of application: 21.08.1991
(73) Proprietor: THE WHITAKER CORPORATION, Wilmington, Delaware 19808 (US)
(72) Inventor: Yingst, Stephen Michael, Hummelstown, Pennsylvania 17036 (US); Briggs, Robert Carl, Newport, Pennsylvania 17074 (US); D'Ambrosia, John Francis, Harrisburg, Pennsylvania 17112 (US); Flickinger, Steven Lee, Hummelstown, Pennsylvania 17036 (US); Owens, Steven Parks, Grantville, Pennsylvania 17028 (US); Zeiders, Jeffrey Allen, Middleton, Pennsylvania 17057 (US)
(74) Representative: Warren, Keith Stanley

(56) References cited:
- EP-A- 0 117 022
- FR-A- 2 503 458
- US-A- 4 736 100

## Description

### TRANSCEIVER PACKAGE

This invention relates to a transceiver package for connecting fiber optic cable to active components operable to transmit and receive optical and electrical signals.

Optical signals are received by an opto-electronic receiver and converted into electrical signals which are then processed and/or utilized. Appropriate response electrical signals are converted into optical signals and transmitted on a separate optical path. Mating between optical cable ends and active devices require great precision, particularly with respect to alignment and mating tolerances. The electronic circuits utilized by the transceiver are typically integrated circuits mounted on boards or ceramic or other substrates of dielectric material, and which generate considerable heat. As these devices function, they experience considerable expansion and contraction due to heat generation. Thermal problems, shielding, electrical grounding, and mechanical protection require care in packaging including care in avoiding cross-coupling of signals into any structures which are utilized for shielding, grounding, and thermal transfer. Because of these diverse requirements, practice has generally separated the electrical and optical components into separate packages. Aside from creating the need for lengthy signal transmission pathways, the practice has led to a relatively costly, bulky, and complicated packaging approach. This in turn has led to the need to do testing, alignment, and tuning in the field to get optical and electronic packages to work compatibly.

Accordingly, it is an object of the present invention to provide a low cost, compact optical/electronic package which integrates connector, optical and integrated circuit components in a compatible manner. It is a further object to provide a transceiver package wherein assembly and use tolerances are accommodated as between optical and electronic structures. It is further object of the invention to provide a transceiver package wherein the functional components can be assembled and tested as a subassembly and then readily assembled with a connector housing and package by a simple fitting together of parts. It is a final object of the invention to provide an electronic package wherein optical and electronic parts are fitted together in a package providing shielding, grounding, thermal management, and mechanical protection of such parts.

The present invention consists in a transceiver package as defined in claim 1. US-A-4 736 100 discloses a transceiver package according to the preamble of claim 1. According to an embodiment of the invention an outer plastic shell has at one end wall portions defining a connector receptacle adapted to receive a connector plug fitted therein and latched thereto. The shell includes a changeable keying feature and interiorly, a wall apertured to receive optical ports and adjacent such wall, interior surfaces adapted to receive in sliding engagement a subassembly containing the functional parts of a transceiver, both optical and electronic, with a cap portion fitted thereover to enclose the subassembly. The subassembly is comprised of a metal platform having an upstanding flange integrally formed therewith containing transmitter and receiver ports and positioning and fixing such ports along an alignment axis relative to the insertion of a plug connector within the receptacle portions of the shell. The platform further includes a base portion carrying a flexible polymeric spacer having low dielectric material constant and good thermal transfer qualities. An integrated circuit substrate is carried on such spacer and includes contact posts oriented to be inserted along an axis transverse to the axis of alignment of the connector when the connector is inserted and disconnectably coupled to the package. Metal boxes are fitted over the substrate for shielding purposes and details are provided in the port elements to accommodate the boxes in a mechanical and electrical connection. The base of the platform is made co-extensive with the integrated circuit substrate to provide heat dissipation, shielding, and the spacer is sufficient to preclude cross-coupling of signals within the substrate and the platform. The substrate and platform are joined through the connection of the active devices in the ports carried by the flange of the platform as well as a pair of posts connected to the substrate and joined to the base of the platform. The remaining posts of the substrate pass through the plane of the substrate and are isolated mechanically, thermally, and electrically therefrom. This interconnection facilitates the slight movements caused by the differential and thermal expansion and contraction of the metal of the platform and the ceramic on the substrate. The platform is further provided with feet or legs, preferably containing features allowing the package to be plugged into and held down against a further circuit board. The subassembly of ports, substrate platform can be handled, tested and inventoried as a separate unit with final assembly into the shell a matter of sliding the assembly in place and attaching the cap of the assembly to such shell.

For a better understanding of the invention, reference will now be made by way of example to the accompanying drawings, in which:

FIGURE 1 is a perspective showing a transceiver package according to an embodiment of the invention mounted on a circuit board preparatory to receiving a mating plug.

FIGURE 2 is a perspective exploded of the package showing shell details in phantom and the various relationship of parts of the subassembly.

FIGURE 3 is a perspective showing a platform structure of the transceiver package.

FIGURE 4 is a plan view of the subassembly of the transceiver package.

FIGURE 5 is an elevational view of a subassembly showing, in partial section, details of an optical port and their relationship to shielding boxes and the platform.

FIGURE 6 is a perspective view of a platform and headers with parts shown exploded apart.

FIGURE 7 is a side elevation view of a header shown in Figure 6.

FIGURE 8 is a bottom plan view of a header shown in Figure 7.

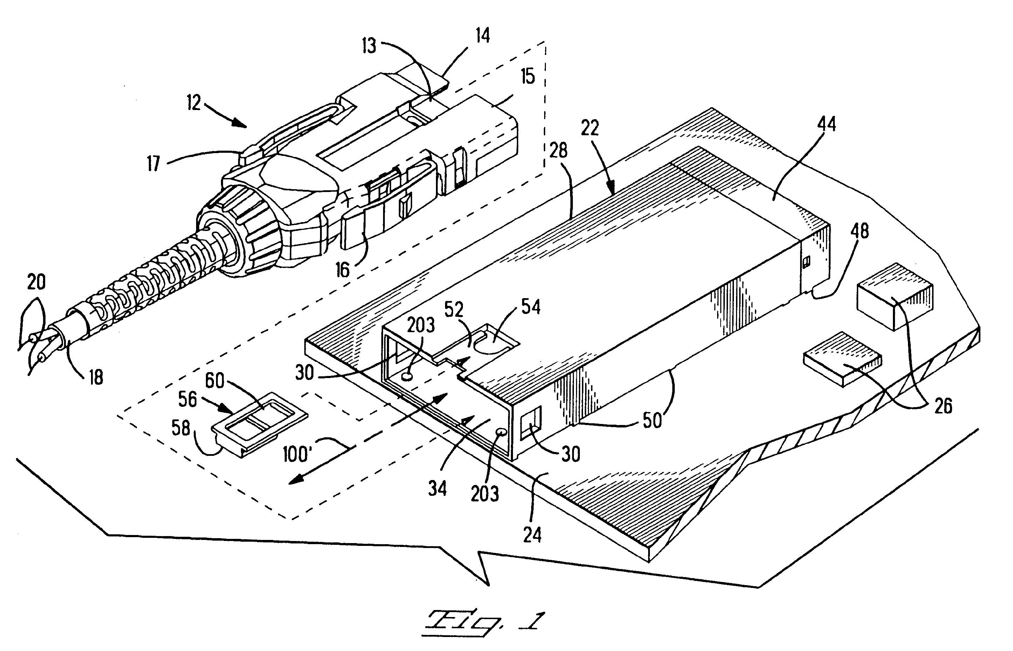

Referring now to Figure 1, an assembly is shown which includes a plug connector 12 preparatory to being inserted in a receptacle formed at the end of a transceiver modular package 22 which is in turn mounted mechanically and electrically on a circuit board 24. The board 24 contains circuit pathways and circuit components 26. The plug connector 12 includes a plug housing 14 carrying integrally formed therewith a pair of latches 16 and 17 and as can be seen, the connector 12 terminates a cable 18 which carries a pair of optical fibers 20. These fibers 20 are typically arranged to carry signals transmitted to and from the package 22.

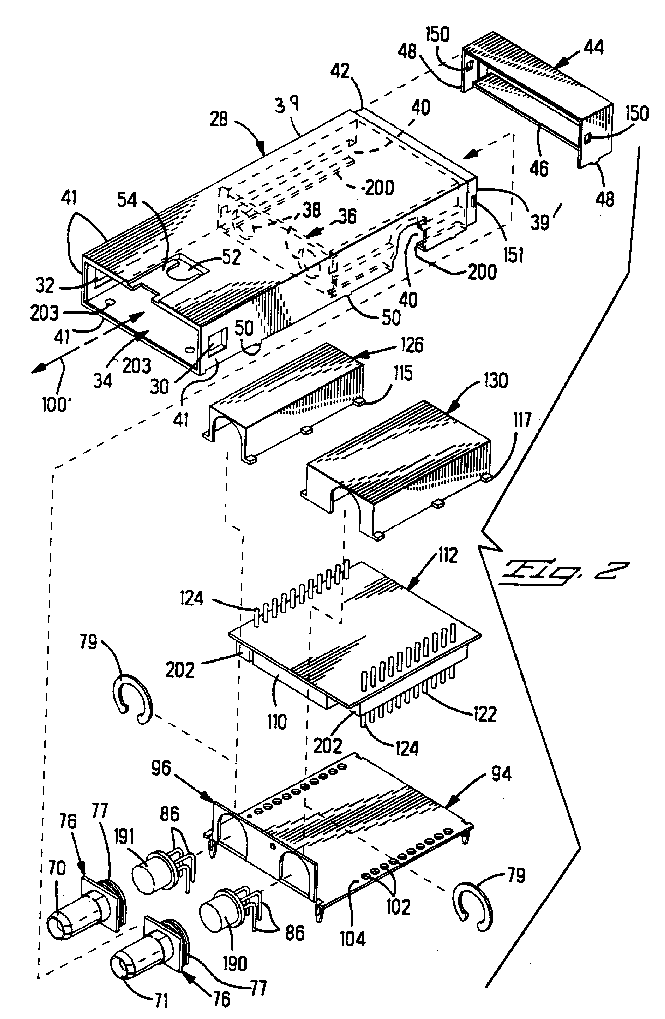

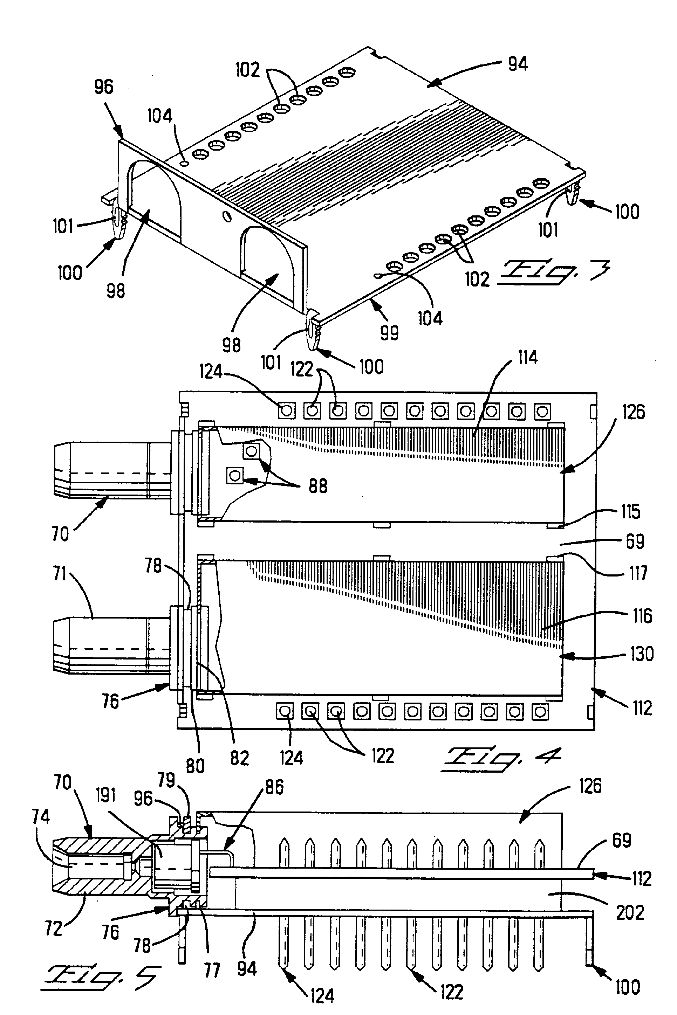

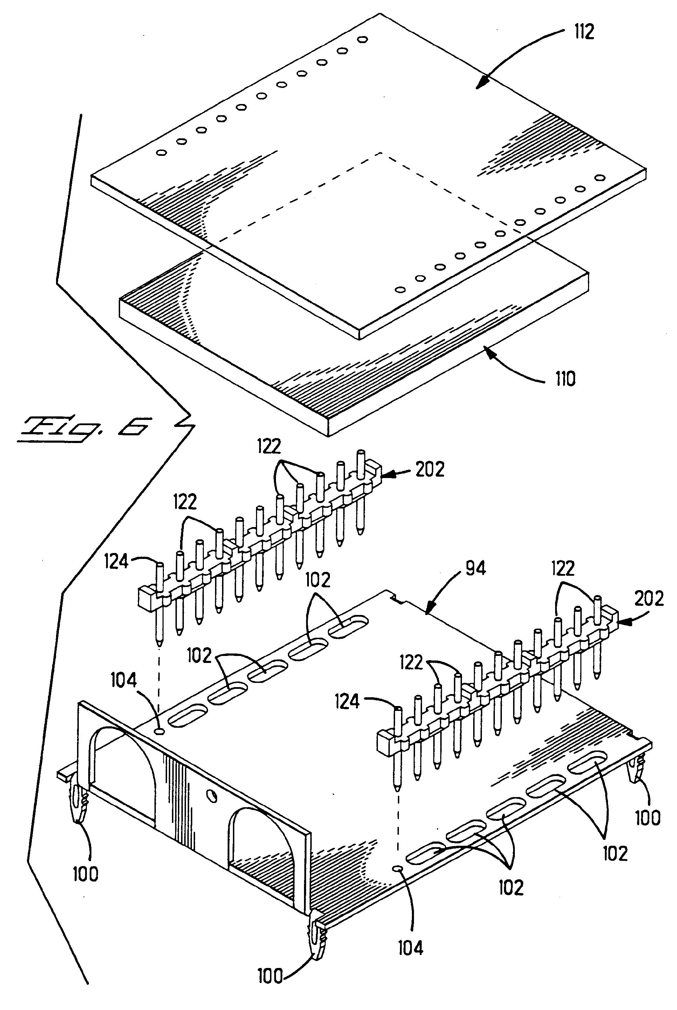

The transceiver package 22 includes an outer shell 28 typically molded of engineering plastic to include the details shown in Figure 2. Outer shell 28 has a box-like configuration with apertures 30 and 32 at one end arranged to receive and engage the latches 16 and 17 of the plug connector 12. Shell 28 has unitary intersecting walls 41 forming a rectangular receptacle 39 with an opening 34 into which the forward plug housing 12 is inserted. The unitary walls 41 are an advantage in that the receptacle 39 is of nonvarying dimensions which would otherwise vary if the walls 41 were assembled of disparate parts. Interiorly of the shell 28 is a wall 36, Figure 2, which contains a pair of apertures 38 through which are fitted optical ports 70,71, Figure 2, in the form of active device mounts to be described hereinafter. An opening 200 in one of the walls 40 is rearward of the wall 36 and extends to the end opposite opening 34. Such end is open as at 39′ to receive a subassembly 69, Figure 4, to be described, and interiorly of the shell walls 41, are grooves 40 on either side of the shell 28 which receive in sliding engagement the outside edges of the subassembly 69. Shell 28 ends in a stepped section 42 to receive and end cap 44 having an interior wall slotted as at 46. The end cap 44 has apertures 150 seating tabs 151 of walls 41, and further includes a pair of projections shown as 48 which serve as standoffs when the package is mounted on board 24. The shell 28 includes further pairs of standoffs 50, the several standoffs 48, 50 allowing the package 22 to be mounted on board 24 with a clearance therebeneath for cleaning, following soldering operations. An arrow 100′ shown in Figure 2 indicates the axis of insertion and of axial alignment for intermating of connectors 12 as well as the axis of insertion and withdrawal of the subassembly 69. Pegs 203 in the wall 40 extend toward board 24.

In the top center portion of shell 28, as shown in Figures 1 and 2, is a keying structure including a relieved slot 52 transverse to the axis of insertion and grooves 54 thereadjacent and aligned to receive the outer edge surfaces of a key element 56 which is made to have a projection 58 and a relief 60 allowing such element to be inserted and snapped into place within the surfaces defined by 52 and 54 of the shell 22. The projection 58 can be varied in width or made to contain alternative geometrics so as to fit into a groove 13 on top of connector 12, such groove 13 fitted into portion 15 of the leading end of connector 12.

The subassembly 69, Figures 1, 4 and 5, includes a platform 94, a spacer shown as 110, and an integrated circuit board or ceramic substrate 112. A plurality of conductive posts 122 in a row are preassembled along a insulative strip called a header 202, and interconnect the substrate 112 to further circuits in board 24. The subassembly 69 further includes a pair of ports 70 and 71 extending through a flange 96 formed from the platform 94 and metallic shielding boxes 126 and 130 positioned as shown in Figures 2, 4 and 5.

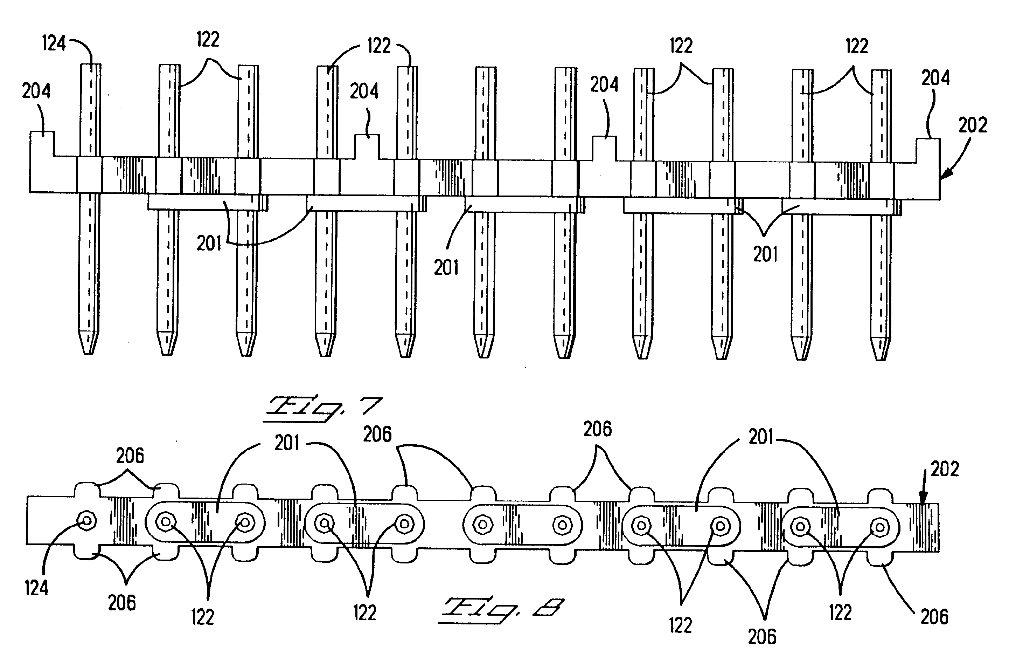

Referring now to Figures 1, 4 and 5, the transmitter and receiver ports 70 and 71 are active device mounts and which align optical transmitter and receiver devices 190, 191 such as an LED diode 190 and a photodetector 191 therewithin. Each of the ports 70,71 includes a beveled front end 72 adapted to guide in mating relationship, a connector 12, which is extended within the bore 74 into a mating engagement of the surface of the active device 190,191. Each port 70,71 includes a front flange 76, Figure 2, generally rectangular in shape, positioned to serve as a stop relative to axial insertion of a port 70,71 through the apertures 98, Figure 3, in the flange 96 of the platform. Each of these ports 70,71 includes a D-shaped section shown as 77, Figures 1 and 5, within an aperture 98 to orient the port 70,71 and fix it against rotation relative to the flange 96, the platform 94, and the substrate 112. Adjacent flange 96 is a groove shown as 78, Figures 4 and 5, having fitted therein a C-clip 79 which locks the port 70,71 to the flange 96. The clip is shown as 79, Figure 5, and thereadjacent is further flange 80 and a groove 82 in the port 70,71 adapted to receive a wall of a shielding box, 126, 130 covering areas 114 and 116 as shown in Figure 4. Leads, shown as 86, extend from the active devices 190,191 within ports 70,71 to be joined as by soldering to the surface of the substrate 112.

A variety of plated holes shown as 88 in Figure 4 connect the various active components 26 to the circuit board 112 and added circuits connect to rows of posts 122 extended along the edges of the substrate 112.

Platform 94, Figure 3, which is preferably formed of thin metal stock stamped into the configuration shown in Figure 3 with the upstanding flange 96 having apertures 98 to receive the ports 70 and 71. The flange 96 is unitary with a base portion 99 extending in area to be co-extensive with the substrate 112 to define outer edges which slide in the grooves 40 of the shell 28. base 99 further includes at the corners, formed down legs shown as 100, each including apertures 101 which make the legs 100 deformable so as to be compressed, and to retain the platform in relation to holes in board 24 thus securing the transceiver package 22 in such board 24 prior to soldering the posts 122 of the subassembly 69 to the board 34. The legs 100 are made to have a cross-sectional area to facilitate conductive heat transfer from the platform 94 to grounding circuits within board 24. The pegs 203 and legs 100 further resist deflection or movement of the transceiver package 22 during alignment of the connector 12, and mating or unmating of the connector 12 in the receptacle 39. These legs 100 can also serve to effect an electrical ground, carrying off voltages induced in the platform 94 and tying the platform 94 to an appropriate voltage level to serve as a ground plane. The platform 94 is made to include a series of apertures or holes 102 along the two sides adapted to accommodate the posts 122 extended therethrough without touching the metallic portions of the platform 94. A pair of reduced diameter holes or apertures 104 are provided in the platform, for example, as in Figure 3 adapted to receive posts such as 124 as shown in Figure 5, which posts 124 are terminated as by soldering to the platform 94 and which may be terminated to ground path in board 24 and to ground circuits within the substrate 112. This serves to tie a ground, commonly and electrically from a ground plane within the substrate 112 to the platform 94 and to ground planes in board 24.

Resting on the upper surface of the platform 94 is a spacer shown as 110. The board areas of the spacer 110 extend directly against the broad area of the substrate 112 between the two headers 202. The platform 94, spacer 110, headers 102 and substrate 112 are sandwiched together as indicated together in Figures 1 and 5. The spacer 110 is preferably made of a low dielectric material which has good thermal characteristics. The material is polymeric and flexible so as to conform to the surfaces of the substrate 112 and platform 94, and is of a thickness to preclude minute induced voltages from being cross-coupled between the platform 94 and the substrate 112. Metal boxes 126 and 130 cover areas 114 and 116 on substrate 112, and are bonded thereto by pads shown as 115 and 117 are joined to the ports 70 and 71 by engagement with the grooves 82. Along the outside edges of the subassembly 69 are an array of posts 122, which are joined to circuits of the substrate 112, and which pass freely through the apertures 104 of the platform 94 to extend through an opening in one of the walls 41 of package 22 in the manner shown in Figure 5.

The substrate 112, spacer 110, headers 102, posts 122, boxes 126, 130 all stack transversely of the axis of alignment of the connector 12 in the subassembly; i.e., along the axis shown by the arrow 100′ in Figure 2. This axis 100′ is parallel to the axes of the ports 70, 71 and the direction of insertion of the plug connector. Due to the span of metal provided by the spacer 110 and the length of leads 86, thermal expansions of the metal parts may differ from the expansions of the ceramic parts. In an actual embodiment, the platform 94 was made of phosphor bronze on the order of 0.635 cm (0.025 inches) in thickness. The ports 70, 71 were made of 303 stainless steel and the shell 28 was made of a polyester PBT. Following assembly of the subassembly 69, the end cap 44 is assembled, and encapsulant material, not shown, is filled flush with the wall 41 through which opening 200 extends.

With reference to Figures 6. 7 and 8 an illustrated platform 94 is substantially the same as disclosed in conjunction with Figure 3, except for the following structure. The apertures 102 extending through the thickness of the platform 94 are elongated along the length of a corresponding header 202 to accommodate two posts 122 in each aperture 102.

The corresponding header 202 is an assembly of an insulative strip and multiple conductive posts 122 projecting through the strip for connection to circuit components of a circuit board. Insulative material of the corresponding header 202 is injection molded with the posts 122 such that the posts 122 are held in positions by the solidified material of the header 202. The corresponding header 202 is substantially the same as a header 102 disclosed in conjunction with Figure 5, except for the following structure. Unitary bosses 201 of the header 202 project outwardly toward the platform 94 and are assembled together with the corresponding posts 122 in corresponding apertures 102. The thickness of the platform 94 encircles the posts, and the header 202 extends between the thickness of the platform 94 and each of the posts 122, to reduce inductive coupling between the platform 94, that may carry eddy currents at one electrical potential, and each of the posts 122, that carry fractional amperage electrical current at their own desired, fixed electrical voltage. The header 202, especially the projecting bosses 201 of the header 202, extends in corresponding apertures 102 to interlock the strip and the platform The header 202 includes unitary insulative columns 204 spaced along the length of the strip 202 and supporting an underside of the circuit board 112 to provide a clearance space between the lengthy surface of the strip 202 and the circuit board 112 to facilitate solder flow and cleaning when the circuit board 112 is joined by solder to the posts 122 and 124. As in Figures 1-5, the spacer 110 provides a heat sink in between and in engagement with the platform 94 and the circuit board 112, such as a ceramic substrate, and the platform 94 supports the strip 202 which in turn supports the circuit board 112, and legs 101 are unitary with the platform 94 and project outward of the thickness of the platform 94 and extend in the same direction as the posts 122 and 124. A series of unitary projections 206 are distributed along the length of the header 202 and are within the thickness plane of the header 202 to prevent warpage of the header 202 during solidification after molding.

## Claims

1. A transceiver package comprising: a receptacle (39) for receiving a plug connector (12) for optical cables (20,20) and a transceiver subassembly (69) received by the receptacle, wherein walls (41) of the receptacle (39) have forward ends which define a first opening (34) of fixed dimensions to receive the connector (12), the subassembly (69) comprising a substrate (112) carrying multiple circuit components (110) and optical transmitter and receiver devices (190,191) and ports (70,71) for aligning said transmitter and receiver devices (190,191) for connection with the connector (12), a key element (56) being retained in one of the walls (41) for fitting along a groove (13) of the connector (12); characterised in that the receptacle (39) is adapted to receive the entire subassembly (69) and that the subassembly further comprises a platform (94) supporting the substrate (112) and posts (122,124) project from the substrate (112) and extend through the platform (94) and through a second opening (200) in a corresponding wall (41) of the receptacle (39).

2. A transceiver package as claimed in claim 1, further characterised in that; the subassembly (69) is slidable along grooves in corresponding walls (41) extending to an end (39) of the receptacle (39), and a cap (44) covers said end (39) of the receptacle (28).

3. A transceiver package as claimed in claim 1 or 2, further characterised in that; the ports (70,71) are on a wall (96) extending from the platform (94)

4. A transceiver package as claimed in claim 1, 2 or 3, further characterised in that: legs (100) of the platform, (94) project through the second opening (200).

## Patentansprüche

1. Gehäuse für einen Sender-Empfänger mit einer Aufnahme (39) zum Aufnehmen eines Steckverbinders (12) für optische Kabel (20, 20) und mit einer Sender-Empfänger-Unteranordnung (69), die durch die Aufnahme aufgenommen ist, wobei Wände (41) der Aufnahme (39) vordere Enden haben, die eine erste Öffnung (34) mit festen Dimensionen zur Aufnahme des Verbinders (12) bilden, wobei die Unteranordnung (69) ein Subtrat (112) aufweist, das mehrere Schaltungskomponenten (110) und optische Sender- und Empfänger-Vorrichtungen (190, 191) und Öffnungen (70, 71) zum Ausrichten der Sender- und Empfänger-Vorrichtungen (190, 191) zum Verbinden mit dem Verbinder (12) trägt, wobei ein Kodierelement (56) in einer der Wände (41) gehalten ist, um längs einer Nut (13) des Verbinders (12) zu passen, dadurch **gekennzeichnet,** daß die Aufnahme (39) so ausgebildet ist, daß sie die gesamte Unteranordnung (69) aufnehmen kann, und daß die Unteranordnung ferner eine Plattform (94), die das Substrat (112) abstützt, sowie Stifte (122, 124) aufweist, die von dem Substrat (112) vorragen und sich durch die Plattform (94) und durch eine zweite Öffnung (200) in einer entsprechenden Wand (41) der Aufnahme (39) hindurch erstrecken.

2. Gehäuse für einen Sender-Empfänger nach Anspruch 1, dadurch **gekennzeichnet**, daß die Unteranordnung (69) längs Nuten in entsprechenden Wänden (41) verschiebbar ist, die sich zu einen Ende (39′) der Aufnahme (39) hin erstrecken, und daß eine Kappe (44) dieses Ende (39′) der Aufnahme (39) abdeckt.

3. Gehäuse für einen Sender-Empfänger nach Anspruch 1 oder 2, dadurch **gekennzeichnet,** daß die Öffnungen (70, 71) an einer Wand (96) liegen, die sich von der Plattform (94) her erstreckt.

4. Gehäuse für einen Sender-Empfänger nach Anspruch 1, 2 oder 3, dadurch **gekennzeichnet,** daß Füße (100) der Plattform (94) sich durch die zweite Öffnung (200) hindurch erstrecken.

## Revendications

1. Boîtier d'émetteur-récepteur comportant : une douille (39) destinée à recevoir un connecteur à fiche (12) pour des câbles optiques (20, 22) et un sous-ensemble émetteur-récepteur (69) reçu par la douille, dans lequel des parois (41) de la douille (39) ont des extrémités avant qui définissent une première ouverture (34) de dimensions fixes pour recevoir le connecteur (12), le sous-ensemble (69) comportant un substrat (112) portant des composants de circuits multiples (110) et des dispositifs optiques émetteur et récepteur (190, 191) et des accès (70, 71) pour l'alignement desdits dispositifs émetteur et récepteur (190, 191) pour une connexion avec le connecteur (12), un élément de clavette (56) étant retenu dans l'une des parois (41) pour s'ajuster le long d'une gorge (13) du connecteur (12) ; caractérisé en ce que la douille (39) est destinée à recevoir le sous-ensemble entier (69) et en ce que le sous-ensemble comporte en outre une plate-forme (94) supportant le substrat (112) et des broches (122, 124) qui font saillie du substrat (112) et s'étendent à travers la plate-forme (94) et à travers une seconde ouverture (200) dans une paroi correspondante (41) de la douille (39).

2. Boîtier d'émetteur-récepteur selon la revendication 1, caractérisé en outre en ce que le sous-ensemble (69) peut glisser le long de gorges dans des parois correspondantes (41) s'étendant jusqu'à une extrémité (39′) de la douille (39), et un chapeau (44) recouvre ladite extrémité (39′) de la douille (39).

3. Boîtier d'émetteur-récepteur selon la revendication 1 ou 2, caractérisé en outre en ce que les accès (70, 71) sont situés sur une paroi (96) s'étendant depuis la plate-forme (94).

4. Boîtier d'émetteur-récepteur selon la revendication 1, 2 ou 3, caractérisé en outre en ce que des pattes (100) de la plate-forme (94) font saillie à travers la seconde ouverture (200).
